# EUROPEAN PATENT APPLICATION

(11) **EP 4 397 444 A1**
(43) Date of publication of application: **10.07.2024**
(21) Application number: 22952929.2
(22) Date of filing: 26.12.2022
(51) Int. Cl.: B25D 17/18, B28D 1/14, B28D 7/02

(54) **DUST COLLECTION DEVICE**

(30) Priority: 26.07.2022 CN 202210889385
(71) Applicant: Jiangsu Dongcheng Tools Technology Co., Ltd, Nantong, Jiangsu 226244 (CN)
(72) Inventor: PU, Yuanwei, Nantong, Jiangsu 226244 (CN)
(74) Representative: Ipside
(86) International application number: PCT/CN2022/141999
(87) International publication number: WO 2024/021500

(57) **Abstract**

A dust collection device, comprising: a main housing; and a suction pipe, which is arranged on the main housing and has a degree of freedom of movement relative to the main housing in a lengthwise direction of the suction pipe. The dust collection device further comprises: a first stop portion, which is configured to limit the distance the suction pipe moves toward the main housing, and is arranged on the suction pipe and has a degree of freedom of movement relative to the suction pipe in the lengthwise direction of the suction pipe; and a first operation portion, which is at least configured to limit the distance the first stop portion moves relative to the suction pipe, and is arranged on the main housing. The dust collection device provided in the present invention is more flexible to use.

## Description

### Technical Field

The disclosure relates to the electric tools, more particularly to a dust collecting device for the electric tools.

### Background of the Invention

The dust collecting device is usually used in conjunction with hand-hold drilling tools (e.g. electric hammers) to collect dust and other debris during drilling operations and prevent dust and other debris from junking in the workplace.

The conventional dust collecting device, such as European Patent No.EP2952292B1, discloses an electric tool dust collector, which limits the suction pipes relative to the dust collector housing by providing a movable depth limiter on the suction pipes of the dust collector, and sets the insertion depth of the suction pipes by a scale movable along with the depth limiter. Because the depth limiter is disposed on the suction pipe, the radial size of the suction pipe is large, which may not be applied to narrow space.

In view of this, it is necessary to provide a dust collecting device to overcome the deficiency of the related art.

### Summary of the Invention

To overcome the deficiency of the prior art, the disclosure provides a dust collecting device with more flexibility.

The technical proposal of the disclosure for solving problems of the related art is that: a dust collecting device comprising a main housing; a suction pipe disposed on the main housing, wherein the suction pipe has a degree of freedom for moving relative to the main housing along the length direction of the suction pipe. The dust collecting device further comprises a first stop portion for limiting the moving distance of the suction pipe towards the main housing, wherein the first stop portion is disposed on the suction pipe and has a degree of freedom for moving relative to the suction pipe along the length direction of the suction pipe, and a first operation portion for limiting the moving distance of the first stop portion relative to the suction pipe, wherein the first operation portion is disposed on the main housing.

The further improvement is that: the first operation portion has a first position and a second position relative to the main housing, and the first operation portion is disposed in the first position to prevent the first stop portion from moving relative to the suction pipe and disposed in the second position to allow the first stop portion moving relative to the suction pipe.

The further improvement is that: the first operation portion comprises a first locking member, the first stop portion comprises a second locking member, the first locking member is engaged with the second locking member when the first operation portion is in a first position, and the first locking member is separated from the second locking member when the first operation portion is in a second position.

The further improvement is that: the first locking member comprises a first toothed rack disposed along the length direction of the suction pipe, and the second locking member comprises a second toothed rack disposed along the length direction of the suction pipe and matched with the first toothed rack, and the length of the first toothed rack is less than the length of the second toothed rack.

The further improvement is that: the first operation portion comprises a first button assembly operably disposed on the main housing, and the first locking member responds to the operation of the first button assembly.

The further improvement is that: the first button assembly comprises a first pressing member and a first response member disposed at the actuating end of the first pressing member, and the first locking member is disposed on the first response member.

The further improvement is that: the suction pipe is provided with a scale for indicating the moving distance of the first stop portion relative to the suction pipe.

The further improvement is that: the suction pipe is provided with a guiding rail extended along the length direction of the suction pipe, and the first stop portion is movably disposed in the guiding rail.

The further improvement is that: the dust collecting device further comprises a second stop portion disposed on the suction pipe along the length direction of the suction pipe and a second operation portion disposed on the main housing, and the second stop portion is matched with the second operation portion to limit the moving distance of the suction pipe away from the main housing.

The further improvement is that: the second operation portion has a first position and a second position relative to the main housing, and the second operation portion is disposed in the first position to prevent the second stop portion from moving relative to the suction pipe and disposed in the second position to allow the second stop portion moving relative to the suction pipe.

The further improvement is that: the second operation portion comprises a third locking member, the second stop portion comprises a fourth locking member, the third locking member is engaged with the fourth locking member when the second operation portion is in the first position, and the third locking member is separated from the fourth locking member when the second operation portion is in the second position.

The further improvement is that: the third locking member comprises a third toothed rack disposed along the length direction of the suction pipe, and the fourth locking member comprises a fourth toothed rack disposed along the length direction of the suction pipe and matched with the third toothed rack, and the length of the third toothed rack is less than the length of the fourth toothed rack.

The further improvement is that: the second operation portion comprises a second button assembly operably disposed on the main housing, and the third locking member responds to the operation of the second button assembly.

The further improvement is that: the second button assembly comprises a second pressing member and a second response member disposed at the actuating end of the second pressing member, the third locking member is disposed on the second response member, and the second response member has a degree of freedom for moving relative to the main housing along the length direction of the suction pipe.

The further improvement is that: the second stop portion is disposed on one side of the suction pipe opposite to the first stop portion.

The disclosure further provides a dust collecting device comprising a main housing; a suction pipe disposed on the main housing, wherein the suction pipe has a degree of freedom for moving relative to the main housing along the length direction of the suction pipe. The dust collecting device further comprises a first stop portion for limiting the moving distance of the suction pipe towards the main housing, wherein the first stop portion is disposed on the suction pipe and has a degree of freedom for moving relative to the suction pipe along the length direction of the suction pipe, and a first operation portion for limiting and adjusting the moving distance of the first stop portion relative to the suction pipe, wherein the first operation portion is disposed on the main housing.

The further improvement is that: the first operation portion has a first position and a second position relative to the main housing, and the first operation portion is disposed in the first position to prevent the first stop portion from moving relative to the suction pipe and disposed in the second position to rotatably adjust a moving distance of the first stop portion relative to the suction pipe.

The further improvement is that: the first operation portion comprises a first locking member, the first stop portion comprises a second locking member, the main housing is provided with a fifth locking member, the first locking member is respectively engaged with the second locking member and the fifth locking member when the first operation portion is in the first position, the first locking member is engaged with the second locking member and the first locking member is separated from the fifth locking member when the first operation portion is in the second position.

The further improvement is that: the first locking member comprises a ring gear, the ring gear comprises a plurality of teeth disposed at equal intervals on a circumference, and the second locking member comprises a second toothed rack disposed along the length direction of the suction pipe, and the second toothed rack is meshed with at least one tooth on the ring gear.

The further improvement is that: the fifth locking member comprises two limiting ribs disposed on the main housing, and at least one tooth on the ring gear is limited between the two limiting ribs when the first operation portion is in the first position.

The further improvement is that: the first operation portion comprises a rotary knob, the rotary knob comprises an inner end portion located inside the main housing and an outer end portion located outside the main housing, and the first locking member is disposed on the inner end portion.

The further improvement is that: the outer end is provided with an operable tapered surface along the circumferential direction.

Compared with the related art, the dust collecting device provided by the disclosure has the following beneficial effects: with the first operation portion arranged on the main housing for controlling the suction pipe to extend-retract, the radial size of the suction pipe has no obvious change, thereby being beneficial to applying the dust collecting device to a narrow space and having more flexibly. In addition, the maximum distance of the suction pipe extended out of the main housing can be limited by the second operation portion cooperating with the second stop portion, which is adapted for working heads with different sizes of electric tools and further improves flexibility.

### Brief description of the Drawings

The embodiments of the disclosure are described in further detail below with reference to the accompanying drawings:
Fig. 1 is a schematic structure diagram of an electric hammer according to an embodiment of the present disclosure.
Fig. 2 is a schematic structure diagram of the bottom structure of the electric hammer in Fig. 1.
Fig. 3 is an exploded view of the installation of the electric hammer and the dust collecting device according to the embodiment of the present disclosure.
Fig. 4 is a schematic view of the installation of the electric hammer and the dust collecting device according to the embodiment of the disclosure.
Fig. 5 is a schematic structure diagram of the interface side of the dust collecting device according to the embodiment of the present disclosure.
Fig. 6 is a cross-sectional view of the interface side of the dust collecting device according to the embodiment of the present disclosure.
Fig. 7 is a schematic cross-sectional view of the dust collecting device according to the embodiment of the present disclosure.
Fig. 8 is a schematic structure diagram of the first operation portion and the first stop portion according to the embodiment of the present disclosure.
Fig. 9 is a schematic structure diagram of the suction pipe side of the embodiment of the present disclosure.
Fig. 10 is a schematic structure diagram of the second operation portion and the second stop portion according to the embodiment of the present disclosure.
Fig. 11 is a schematic structure diagram of the other side of the suction pipe according to the embodiment of the present disclosure.
Fig. 12 is a schematic structure diagram of the second response member moving in the main housing according to the embodiment of the present disclosure.
Fig. 13 is a schematic structure diagram of the first operation portion and the first stop portion according to another embodiment of the present disclosure.
Fig. 14 is a cross-sectional view of the first operation portion in the main housing according to another embodiment of the present disclosure.
Fig. 15 is a schematic structure diagram of the other side of the suction pipe according to the embodiment of the present disclosure.

### REFERENCES IN THE DRAWINGS:

100, electric hammer; 110, drill bit; 120, guiding notch; 130, guiding groove; 140, positioning groove; 150, conductive interface; 200, battery pack; 300, dust collecting device; 310, main housing; 311, fifth locking member; 312, limiting block; 320, power assembly; 321, motor; 322, fan; 323, filter assembly; 330, suction pipe; 331, guiding rail; 332, scale; 340, interface; 341, guiding rib; 342, pin; 343, pushrod; 344, first return spring; 345, guiding inclined surface; 346, conductive terminal; 350, connecting pipe; 360, suction head; 361, suction hole; 370, bellows; 380, dust collecting cavity; 400, first operation portion; 410, first locking member; 420, first pressing member; 421, first cylinder; 422, second return spring; 430, first response member; 431, third return spring; 440, rotary knob; 441, fourth return spring; 442, tapered surface; 500, first stop portion; 510, protrusion; 520, second locking member; 600, second operation portion; 610, third locking member; 620, second pressing member; 621, second cylinder; 622, fifth return spring; 630, second response member; 631, sixth return spring; 632, sliding sleeve; 700, second stop portion; 710, fourth locking member.

### Detailed Description of Embodiments

Terms used in the present disclosure are for the purpose of describing embodiments only and are not intended to limit the disclosure. For example, the following terms "top", "bottom", "front", "rear", "left", "right" and the like indicating an orientation or positional relationship are based solely on the orientation or positional relationship shown in the drawings, for ease of description of the disclosure only and simplification of description, and are not intended to indicate or imply that the device/element in question must have or be constructed and operated in a particular orientation and therefore cannot be construed as limiting to the disclosure.

The disclosure is described in further detail below with reference to the accompanying drawings and embodiments.

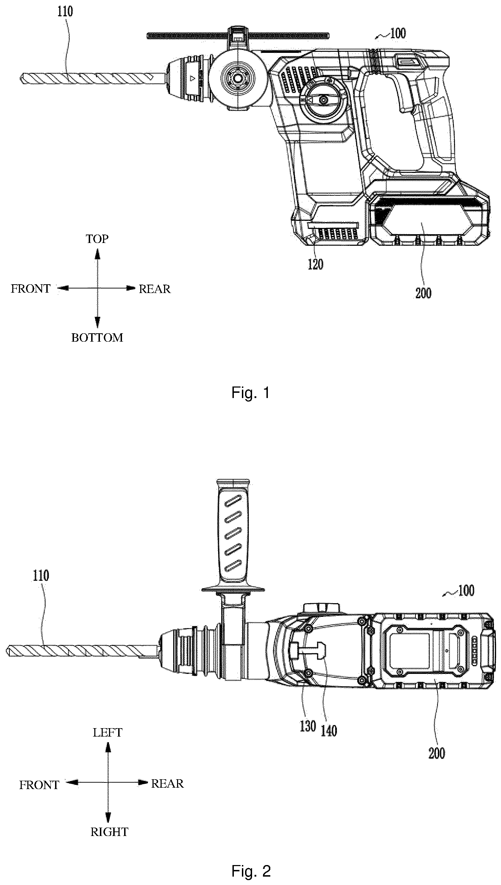

With reference to Fig. 1, the present disclosure provides an electric tool with a dust collecting device, such as an electric hammer 100, the electric hammer 100 is powered by a battery pack 200, and the battery pack 200 can be installed on the electric hammer 100 in a pluggable manner, for example. The operating end of the electric hammer 100 is provided with a drill bit 110, and the drill bit 110 produces a rapid reciprocating impact along the axial direction of the drill bit 110 while rotating, and can drill holes in operating objects such as concrete, floors, brick walls and stones. During the drilling process, dust and other debris are generated at the drill bit 110. Therefore, the electric hammer 100 is provided with a dust collecting device 300 to collect dust and other debris during the drilling operation, so as to prevent dust and other debris from junking in the workplace.

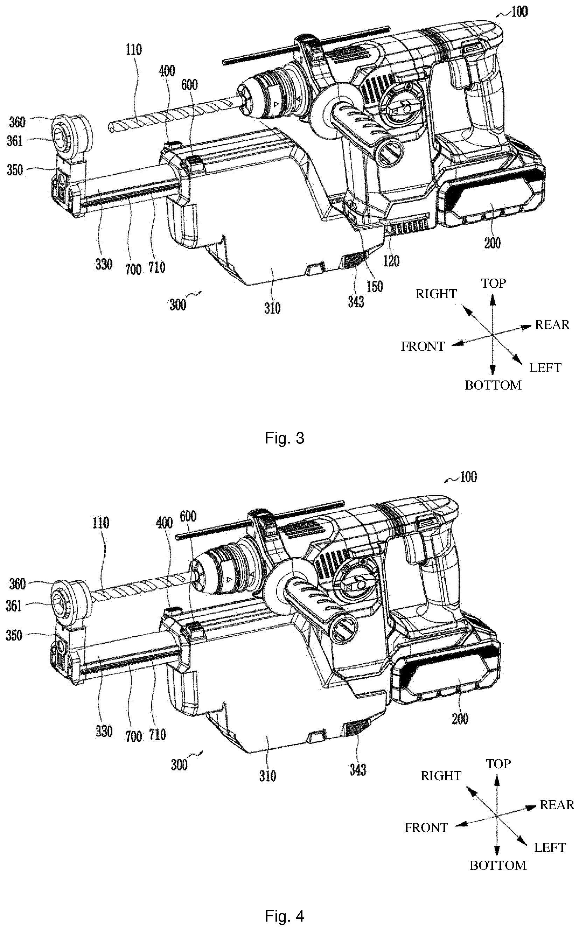

With reference to Figs. 3 and 4, the dust collecting device 300 may be installed on the electric hammer 100 by plugging and unplugging. For example, the dust collecting device 300 can be slidably installed to the electric hammer 100 in a front-to-rear direction. The dust collecting device 300 comprises a main housing 310, a power assembly 320 disposed in the main housing 310, and a suction pipe 330 disposed at the front end of the main housing 310.

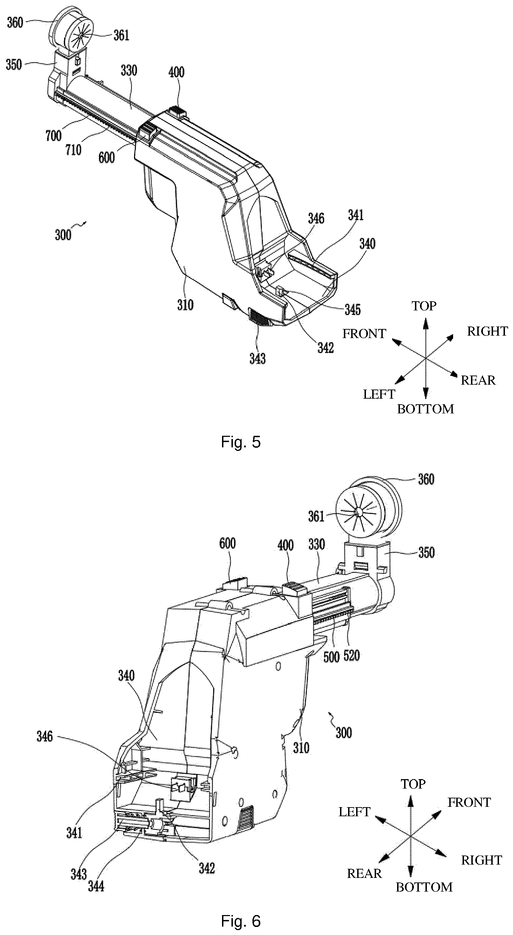

With reference to Figs. 5 and 6, in the present embodiment, the rear end of the main housing 310 is provided with an interface 340 via which the dust collecting device 300 is connected and fixed to the electric hammer 100. For example, a part of the electric hammer 100 is housed in the interface 340. The interface 340 is provided with two guiding ribs 341 extended in the front-rear direction, the two guiding ribs 341 are respectively provided on the left and right inner walls of the interface 340, the electric hammer 100 is provided with two guiding notches 120 disposed in the front-rear direction, and the two guiding notches 120 are respectively provided on the left and right outer walls of the electric hammer 100. The guiding ribs 341 and the guiding notches 120 play a guiding role during the installation of the dust collecting device 300 to the electric hammer 100, and the guiding ribs 341 and the guiding notches 120 play a fixing role after the dust collecting device 300 is installed on the electric hammer 100.

The bottom surface of the interface 340 is provided with a pin 342 protruded from the bottom surface, the pin 342 can be moved in the left-right direction on the bottom surface of the interface 340. In the present embodiment, the pin 342 is disposed at a starting position near the left side of the bottom surface and can be moved toward the right side of the bottom surface. The main housing 310 is provided with a pushrod 343 for moving the pin 342, one end of the pushrod 343 is protruded to the outside of the main housing 310, and the other end is fixed to the pin 342. For example, the pushrod 343 can be extended in the left-right direction, and a first return spring 344 is also disposed between the pushrod 343 and the main housing 310. When the pushrod 343 is released, the pushrod 343 moves the pin 342 to the left together under the operation of the first return spring 344.

With reference to Fig. 2, the bottom of the electric hammer 100 is provided with a guiding groove 130 extended in the front-back direction, the front end of the guiding groove 130 is provided with an opening for supplying the pin 342 into the guiding groove 130, the rear end of the guiding groove 130 is provided with a positioning groove 140 for receiving the pin 342, and the positioning groove 140 is extended in the left-right direction so that the pin 342 can be returned to the starting position under the drive of the first return spring 344 after moving into the positioning groove 140. With the engagement of the pin 342 and the positioning groove 140, the electric hammer 100 can be prevented from being detached from the interface 340 of the dust collecting device 300 in the front-rear direction.

Further with reference to Figs. 5 and 6, the dust collecting device 300 can be installed on the electric hammer 100 in two ways: Mode One, in the process of mounting the dust collecting device 300 on the electric hammer 100 in the front-rear direction, the pin 342 is moved to the path of the guiding groove 130 by pushing the pushrod 343 to the right, so that the pin 342 can smoothly enter the guiding groove 130. Mode Two, a guiding inclined surface 345 is provided on the left side of the pin 342, a part of the pin 342 deviates from the path of the guiding groove 130, and a part of the guiding inclined surface 345 is located on the path of the guiding groove 130. The dust collecting device 300 can be installed on the electric hammer 100 by sliding the dust collecting device 300 directly in the front-rear direction. During the installation, the left edge of the opening of the guiding groove 130 moves along the guiding inclined surface 345, and the pin 342 smoothly moves from the position deviated from the path of the guiding groove 130 to the path completely located in the guiding groove 130 until it moves along the guiding groove 130 to the positioning groove 140.

When it is necessary to detach the dust collecting device 300 from the electric hammer 100, the pin 342 is moved to the path of the guiding groove 130 by pushing the pushrod 343 to the right, and then the electric hammer 100 is pulled backward or the dust collecting device 300 is pulled forward to separate the dust collecting device 300 from the electric hammer 100. During the separation of the dust collecting device 300 from the electric hammer 100, the pin 342 is moved along the guiding groove 130 to disengage from the guiding groove 130, and then the pin 342 is returned to the starting position by the drive of the first return spring 344.

With reference to Figs. 5 and 6, a conductive terminal 346 is provided in the interface 340 of the dust collecting device 300, and correspondingly, a conductive interface 150 is provided on the electric hammer 100. When the dust collecting device 300 is installed on the electric hammer 100, the conductive terminal 346 is inserted into the conductive interface 150, so that an electric energy transmission path is formed between the dust collecting device 300 and the electric hammer 100. With reference to Fig. 4, in the present embodiment, the dust collecting device 300 shares the battery pack 200 with the electric hammer 100 when installed on the electric hammer 100. That is, the battery pack 200 can supply power to the dust collecting device 300 via an electric power transmission path formed by the conductive terminal 346 and the conductive interface 150 while supplying power to the electric hammer 100.

Further with reference to Fig. 4, when the dust collecting device 300 is installed on the electric hammer 100, the central axis of the suction pipe 330 of the dust collecting device 300 and the central axis of the drill bit 110 of the electric hammer 100 are in a plane extended in the top-bottom direction, so that the combination formed by the drill bit 110 and the suction pipe 330 has a small size in the left-right direction and can be used in a narrow space.

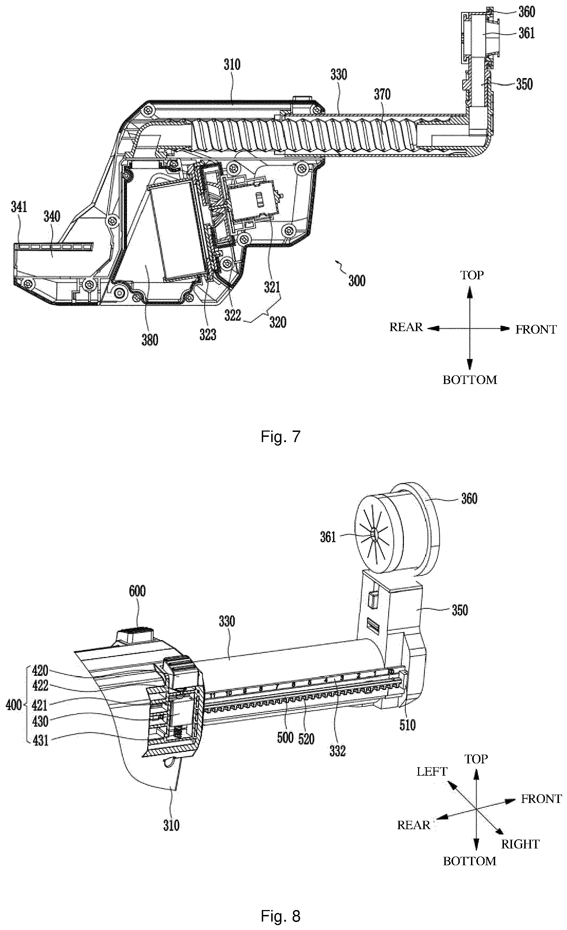

With reference to Fig. 7, the front end of the suction pipe 330 of the dust collecting device 300 is extended from the main housing 310, and the rear end is extended into the main housing 310, in which a space allowing the suction pipe 330 to move forward and backward relative to the main housing 310 is formed. A connecting pipe 350 perpendicular to the suction pipe 330 is provided at the front end of the suction pipe 330, one end of the connecting pipe 350 is fixed to the front end of the suction pipe 330, and the other end of the connecting pipe 350 is provided with a suction head 360, in which a suction hole 361 is formed. The drill bit 110 of the electric hammer 100 passes through the suction hole 361. When the drill bit 110 drills an operating object such as concrete, floor, brick wall, and stone, the suction head 360 is attached on the surface of the operating object and forms a negative pressure between the suction head 360 and the operating object to suck dust and other debris generated at the drill bit 110. The suction hole 361, the connecting pipe 350, and the suction pipe 330 are sequentially connected to form a channel for guiding the dust and other debris into the dust collecting cavity. A bellows 370 is provided in the suction pipe 330. When the suction pipe 330 moves relative to the main housing 310, the bellows 370 will extend-retract following the movement of the suction pipe 330. One end of the bellows 370 is connected to the dust collecting cavity 380, and the other end is connected to the connecting pipe 350. The dust and other debris enter the dust collecting cavity 380 through the suction hole 361, the connecting pipe 350 and the bellows 370 sequentially.

Further with reference to Fig. 7, the power assembly 320 comprises a motor 321 disposed near the dust collecting cavity 380 and a fan 322 disposed on an output shaft of the motor 321. When the motor 321 drives the fan 322 to rotate, the fan 322 exhausts the gas in the dust collecting cavity 380 via the filter assembly 323 to form a negative pressure in the dust collecting cavity 380, thereby forming the negative pressure between the suction head 360 and the operating object to suck dust and other debris generated at the drill bit 110 into the suction hole 361.

With reference to Fig. 8, in the present embodiment, a first operation portion 400 is provided on the main housing 310 of the dust collecting device 300, and a first stop portion 500 is provided on the suction pipe 330, wherein the first stop portion 500 is for limiting the distance that the suction pipe 330 moves toward the main housing 310, and the first operation portion 400 is for limiting the distance that the first stop portion 500 moves relative to the suction pipe 330. The first stop portion 500 is provided on the right side surface of the suction pipe 330 and can be freely moved in the front-back direction on the suction pipe 330. For example, the suction pipe 330 is provided with a guiding rail 331 extended along the length direction of the suction pipe 330. The first stop portion 500 is movably provided in the guiding rail 331. The suction pipe 330 is provided with a scale 332 above the guiding rail 331. The scale 332 can be in centimeters, which indicates the distance of movement of the first stop portion 500 relative to the suction pipe 330, thereby indicating the distance of movement of the suction pipe 330 towards the main housing 310. A protrusion 510 is provided at the front end of the first stop portion 500, which is perpendicular to the first stop portion 500, and is extended out of the guiding rail 331. On the one hand, the protrusion 510 can indicate a degree on the scale 332, i.e. a reading of the protrusion 510 on the scale 332 when the first stop portion 500 is moved indicates a distance that the suction pipe 330 can move toward the main housing 310. On the other hand, the protrusion 510 can be a handle for moving the first stop portion 500 and the operator can move the first stop portion 500 by toggling the protrusion 510. For example, when it is necessary to limit the distance at which the suction pipe 330 can be moved toward the main housing 310 to 5cm, the protrusion 510 can be toggled and drive the first stop 500 to move at where the protrusion 510 pointing to the number "5" on the scale 332.

Further with reference to Fig. 8, in the present embodiment, the first operation portion 400 has a first position and a second position relative to the main housing 310, and the first operation portion 400 can be a first button assembly. The first position represents a position on the main housing 310 when the first button assembly is not pressed, and the second position represents a position on the main housing 310 when the first button assembly is pressed. The first operation portion 400 comprises a first locking member 410 and the first stop portion 500 comprises a second locking member 520. When the first operation portion 400 is at the first position, the first locking member 410 is engaged with the second locking member 520, thereby preventing the first stop portion 500 from moving with respect to the suction pipe 330. When the first operation portion 400 is at the second position, the first locking member 410 is separated from the second locking member 520, thereby allowing the first stop portion 500 to move relative to the suction pipe 330.

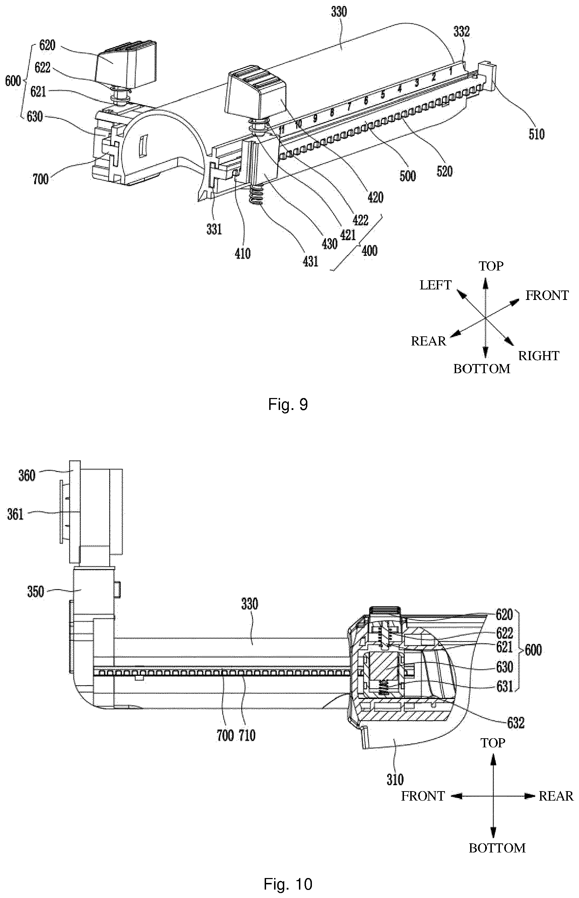

With reference to Fig. 9, in the present embodiment, the first operation portion 400 comprises a first pressing member 420 and a first response member 430 provided at an actuating end of the first pressing member 420. The first locking member 410 is disposed on the first response member 430. The first pressing member 420 and the first response member 430 are movable relative to the main housing 310 in the top-bottom direction. A first cylinder 421 is formed on the bottom surface of the first pressing member 420, and a second return spring 422 is sleeved on the first cylinder 421. The first cylinder 421 serves as an actuating end of the first pressing member 420, and one end of the second return spring 422 is attached against the bottom surface of the first pressing member 420 and the other end is attached against the main housing 310. A third return spring 431 is provided at the bottom of the first response member 430. One end of the third return spring 431 is attached against the bottom surface of the first response member 430 and the other end is attached against the main housing 310. When the first operation portion 400 is at the first position, the first pressing member 420 is supported at the initial position by the second return spring 422, and the first response member 430 is supported at the initial position by the third return spring 431. At this time, the first locking member 410 is engaged with the second locking member 520, and the first stop portion 500 is not movable. When the first operation portion 400 is pressed downward to the second position, the first pressing member 420 is pressed down, the second return spring 422 is compressed, the first cylinder 421 on the bottom surface of the first pressing member 420 is attached against the top surface of the first response member 430 and pushes the first response member 430 downward until the first locking member 410 is separated from the second locking member 520. At this time, the third return spring 431 is compressed, and the first stop portion 500 is movable. When the force that presses the first operation portion 400 downward is withdrawn, the first pressing member 420 is restored to the initial position under the drive of the second return spring 422, and the first response member 430 is restored to the initial position under the drive of the third return spring 431.

Further with reference to Figs. 8 and 9, in the present embodiment, the first locking member 410 comprises a first toothed rack disposed along the length direction of the suction pipe 330, and the second locking member 520 comprises a second toothed rack disposed along the length direction of the suction pipe 330. The first toothed rack and the second toothed rack are disposed in opposite and staggered positions, such that the first toothed rack is meshed with the second toothed rack when the first locking member 410 is engaged with the second locking member 520. In order to ensure that the first toothed rack can engage with the second toothed rack when the first stop portion 500 is moved to any position, the length of the first toothed rack is defined to be less than the length of the second toothed rack in the embodiment.

In the present embodiment, the first operation portion 400 is only used for locking and releasing the first stop portion 500 in cooperation with the first stop portion 500 to limit the distance of movement of the suction pipe 330 toward the main housing 310. During the operation of the present embodiment, the first operation portion 400 is pressed to release the first stop portion 500. At this time, the operator can move the first stop portion 500 to a preset position by toggling the protrusion 510, and then releasing the first operation portion 400 to lock the first stop portion 500.

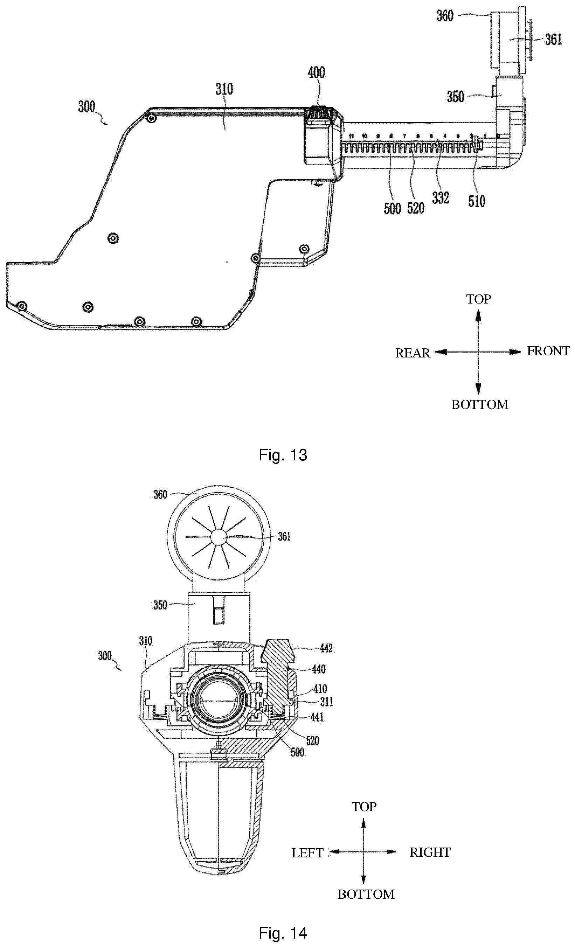

With reference to Fig. 13, in another embodiment, the main housing 310 of the dust collecting device 300 is provided with a first operation portion 400, and the suction pipe 330 is provided with a first stop portion 500, wherein the first stop portion 500 is for limiting the distance of the suction pipe 330 moving towards the main housing 310, and the first operation portion 400 can not only limit the distance of the first stop portion 500 moving relative to the suction pipe 330, but also adjust the distance of the first stop portion 500 moving relative to the suction pipe 330. The first operation portion 400 has a first position and a second position relative to the main housing 310, wherein the first position represents a position on the main housing 310 when the first operation portion 400 is not pressed, and the second position represents a position on the main housing 310 when the first operation portion 400 is pressed. The first operation portion 400 comprises a first locking member 410, the first stop portion 500 comprises a second locking member 520 and a fifth locking member 311 is provided on the main housing 310. When the first operation portion 400 is at the first position, the first locking member 410 is engaged with the second locking member 520 and the fifth locking member 311 respectively, thereby preventing the first stop portion 500 from moving with respect to the suction pipe 330. When the first operation portion 400 is at the second position, the first locking member 410 is engaged with the second locking member 520 and is separated from the fifth locking member 311, thereby allowing the first stop portion 500 to move relative to the suction pipe 330.

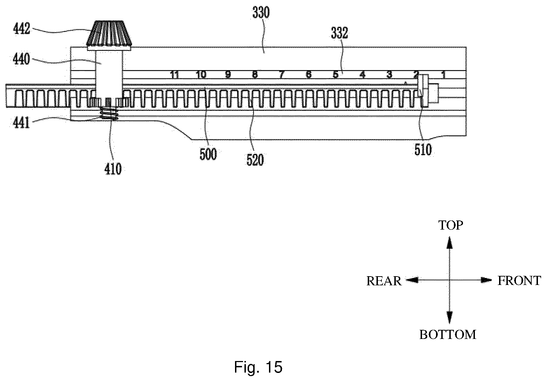

With reference to Figs. 14 and 15, in another embodiment, the first operation portion 400 comprises a depressible rotary knob 440, a fourth return spring 441 disposed below the rotary knob 440. The rotary knob 440 comprises an inner end portion located inside the main housing 310 and an outer end portion located outside the main housing 310. The first locking member 410 comprises a ring gear disposed on the inner end portion in the circumferential direction, the ring gear comprising a plurality of teeth disposed at equal intervals on a circumference. The second locking member 520 comprises a second toothed rack disposed along the length direction of the suction pipe 330, the second toothed rack is meshed with at least one tooth on the ring gear. The fifth locking member 311 comprises two limiting ribs (only one of which is shown in Fig. 14) provided on the main housing 310. At least one tooth on the ring gear is located between the two limiting ribs, when the first operation portion 400 is in the first position. When the first operation portion 400 is at the first position, the rotary knob 440 is supported at the initial position by the fourth return spring 441. At this time, the ring gear is meshed with the second toothed rack and the two limiting ribs respectively, so that the rotary knob 440 is not rotatable and the first stop portion 500 is not movable. When the first operation portion 400 is pressed down to the second position, the rotary knob 440 is pressed down and the fourth return spring 441 is compressed. At this time, the ring gear is still engaged with the second toothed rack and the ring gear is separated from the two limiting ribs, so that the rotary knob 440 can be rotated, and the rotation of the rotary knob 440 drives the ring gear to rotate, thereby driving the first stop portion 500 to move. When the force that presses the first operation portion 400 downward is withdrawn, the rotary knob 440 is restored to the initial position under the drive of the fourth return spring 441.

The outer end portion of the rotary knob 440 is provided with a tapered surface 442 in the circumferential direction, the tapered surface 442 is convenient to press and rotate the rotary knob 440, and the tapered surface 442 is provided with an anti-skid pattern.

In the above-described embodiment, the first operation portion 400 is used not only for locking and releasing the first stop portion 500, but also for adjusting the first stop portion 500 when the first stop portion 500 is released, in cooperation with the first stop portion 500 to limit the distance of movement of the suction pipe 330 toward the main housing 310. In the operation of the above embodiment, the first stop portion 500 is released by pressing the rotary knob 440 by pressing the tapered surface 442. At this time, the operator can move the first stop portion 500 to a preset position by applying a force to the tapered surface 442 to rotate the rotary knob 440, and then release the rotary knob 440 to lock the first stop portion 500.

With reference to Fig. 10, in the present embodiment, a second operation portion 600 is provided on the main housing 310 of the dust collecting device 300, and a second stop portion 700 is provided on the suction pipe 330, and the second stop portion 700 cooperates with the second operation portion 600 to limit the distance that the suction pipe 330 moves away from the main housing 310. The second stop portion 700 is fixedly provided on the left side surface of the suction pipe 330. For example, the second stop portion 700 and the suction pipe 330 are integrally molded. The second operation portion 600 has a first position and a second position relative to the main housing 310, and the second operation portion 600 can be a second button assembly, wherein the first position represents a position on the main housing 310 when the second button assembly is not pressed, and the second position represents a position on the main housing 310 when the second button assembly is pressed. The second operation portion 600 comprises a third locking member 610 and the second stop portion 700 comprises a fourth locking member 710. When the second operation portion 600 is at the first position, the third locking member 610 is engaged with the fourth locking member 710, thereby preventing the second stop portion 700 from moving following the suction pipe 330. When the second operation portion 600 is at the second position, the third locking member 610 is separated from the fourth locking member 710, thereby allowing the second stop portion 700 to move following the suction pipe 330.

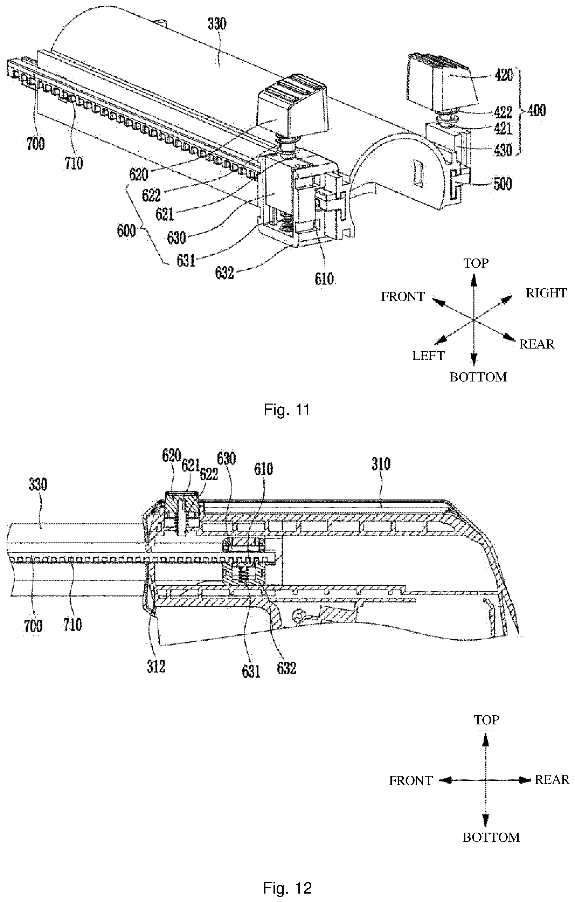

With reference to Fig. 11, in the present embodiment, the second operation portion 600 comprises a second pressing member 620 and a second response member 630 provided at the actuating end of the second pressing member 620, and the outside of the second response member 630 is wrapped with a sliding sleeve 632 with a top-right opening. A third locking member 610 is provided on the second response member 630 and is extended out of the sliding sleeve 632. The second pressing member 620 and the second response member 630 are movable relative to the main housing 310 in the top-bottom direction. A second cylinder 621 is formed on the bottom surface of the second pressing member 620, and a fifth return spring 622 is sleeved on the second cylinder 621. The second cylinder 621 serves as an actuating end of the second pressing member 620, and one end of the fifth return spring 622 is attached against the bottom surface of the second pressing member 620 and the other end is attached against the main housing 310. A sixth return spring 631 is provided below the second response member 630. One end of the sixth return spring 631 is attached against the bottom surface of the second response member 630 and the other end is attached against the inner surface of the sliding sleeve 632. When the second operation portion 600 is at the first position, the second pressing member 620 is supported at the initial position by the fifth return spring 622, and the second response member 630 is supported at the initial position by the sixth return spring 631. At this time, the third locking member 610 is engaged with the fourth locking member 710, and the second stop portion 700 cannot be moved following the suction pipe 330. When the second operation portion 600 is pressed downward to the second position, the second pressing member 620 is pressed down, the fifth return spring 622 is compressed, the second cylinder 621 on the bottom surface of the second pressing member 620 is attached against the top surface of the second response member 630 and pushes the second response member 630 to the third locking member 610 downward to separate from the fourth locking member 710. At this time, the sixth returning spring 631 is compressed, the second stop portion 700 is movable, and the second response member 630 and the sliding sleeve 632 are movable together with the second stop portion 700. When the force that presses the second operation portion 600 downward is withdrawn, the second pressing member 620 is restored to the initial position under the drive of the fifth return spring 622, and the second response member 630 is restored to the initial position under the drive of the sixth return spring 631.

Further with reference to Figs. 10 and 11, in the present embodiment, the third locking member 610 comprises a third toothed rack disposed along the length direction of the suction pipe 330, and the fourth locking member 710 comprises a fourth toothed rack disposed along the length direction of the suction pipe 330. The third toothed rack and the fourth toothed rack are disposed in opposite and staggered positions such that the third toothed rack meshes with the fourth toothed rack when the third locking member 610 is engaged with the fourth locking member 710. In order to ensure that the third toothed rack can engage with the fourth toothed rack when the second stop portion 700 is moved to any position, the length of the third toothed rack is defined to be less than the length of the fourth toothed rack in the embodiment.

With reference to Fig. 10 and Fig. 12, in the present embodiment, a limiting block 312 is provided at the front end of the main housing 310. The second response member 630 and the sliding sleeve 632 move together with the second stop portion 700 during the movement of the suction pipe 330. The cooperation of the limiting block 312 and the second stop portion 700 can prevent the second response member 630 and the sliding sleeve 632 from being separated from the main housing 310 during the movement of the suction pipe 330 away from the main housing 310, thereby preventing the suction pipe 330 from being separated from the main housing 310 during the movement of the suction pipe 330 away from the main housing 310.

According to the present disclosure, the distance of the suction pipe 330 moving away from the main housing 310 can be limited by the cooperation of the second operation portion 600 and the second stop portion 700. That is, the initial position of the suction pipe 330 moving toward the main housing 310 can be set, and in this way, the dust collecting device 300 can be adapted to drill bits 110 of different sizes. For example, when the electric hammer 100 has the long drill bit 110, the suction pipe 330 is moved in a direction away from the main housing 310 by pressing the second operation portion 600 until the front end of the long drill bit 110 just does not protrude from the suction head 360. When the electric hammer 100 has the short drill bit 110, the suction pipe 330 is moved in the direction toward the main housing 310 by pressing the second operation portion 600 until the front end of the short bit 110 just does not protrude from the suction head 360. In this way, the initial position at which the suction pipe 330 moves toward the main housing 310 can be set according to the size of the drill bit 110. That is, the suction pipe 330 can move toward the main housing 310 from the set initial position during the operation of the electric hammer 100 regardless of the size of the drill bit 110.

Thus, the present disclosure can realize the movement of the suction pipe 330 in a predetermined interval by limiting the distance of the suction pipe 330 moving toward the main housing 310 by the cooperation of the first operation portion 400 and the first stop portion 500, and limiting the distance of the suction pipe 330 moving away from the main housing 310 by the cooperation of the second operation portion 600 and the second stop portion 700.

According to the present disclosure, the second stop portion 700 is provided on the suction pipe 330 on the side opposite to the first stop portion 500, and accordingly, the second operation portion 600 is also provided on the main housing 310 on the side opposite to the first operation portion 400. With this arrangement, the weight of the left and right sides of the dust collecting device 300 is facilitated to balance, the use comfort is increased, and the operation is convenient.

The present disclosure is not limited to the above specific embodiments. One having ordinary skill in the art will readily appreciate that there are many alternatives to the dust collecting device 300 of the present disclosure without departing from the principles and scope of the present disclosure. The protection scope of the disclosure shall be subject to the contents of the claims.

## Claims

1. A dust collecting device comprising:
a main housing;
a suction pipe disposed on the main housing, wherein the suction pipe has a degree of freedom for moving relative to the main housing along the length direction of the suction pipe;
**characterized in that**, further comprising:
a first stop portion for limiting the moving distance of the suction pipe toward the main housing, wherein the first stop portion is disposed on the suction pipe and has a degree of freedom for moving relative to the suction pipe along the length direction of the suction pipe; and
a first operation portion for limiting the moving distance of the first stop portion relative to the suction pipe, wherein the first operation portion is disposed on the main housing.

2. The dust collecting device according to claim 1, wherein the first operation portion has a first position and a second position relative to the main housing, and the first operation portion is disposed in the first position to prevent the first stop portion from moving relative to the suction pipe and disposed in the second position to allow the first stop portion moving relative to the suction pipe.

3. The dust collecting device according to claim 2, wherein the first operation portion comprises a first locking member, the first stop portion comprises a second locking member, the first locking member is engaged with the second locking member when the first operation portion is in the first position, and the first locking member is separated from the second locking member when the first operation portion is in the second position.

4. The dust collecting device according to claim 3, wherein the first locking member comprises a first toothed rack disposed along the length direction of the suction pipe, and the second locking member comprises a second toothed rack disposed along the length direction of the suction pipe and matched with the first toothed rack, and the length of the first toothed rack is less than the length of the second toothed rack.

5. The dust collecting device according to claim 3, wherein the first operation portion comprises a first button assembly operably disposed on the main housing, and the first locking member responds to the operation of the first button assembly.

6. The dust collecting device according to claim 5, wherein the first button assembly comprises a first pressing member and a first response member disposed at an actuating end of the first pressing member, and the first locking member is disposed on the first response member.

7. The dust collecting device according to claim 1, wherein the suction pipe is provided with a scale indicating a moving distance of the first stop portion relative to the suction pipe.

8. The dust collecting device according to claim 1, wherein a guiding rail extended along the length direction of the suction pipe is disposed on the suction pipe, and the first stop portion is movably disposed in the guiding rail.

9. The dust collecting device according to claim 1, wherein the dust collecting device further comprises a second stop portion disposed on the suction pipe along the length direction of the suction pipe and a second operation portion disposed on the main housing, and the second stop portion cooperates with the second operation portion to limit the moving distance of the suction pipe away from the main housing.

10. The dust collecting device according to claim 9, wherein the second operation portion has a first position and a second position relative to the main housing, and the second operation portion is disposed in the first position to prevent the second stop portion from moving relative to the suction pipe and disposed in the second position to allow the second stop portion moving relative to the suction pipe.

11. The dust collecting device according to claim 10, wherein the second operation portion comprises a third locking member, the second stop portion comprises a fourth locking member, the third locking member is engaged with the fourth locking member when the second operation portion is in the first position, and the third locking member is separated from the fourth locking member when the second operation portion is in the second position.

12. The dust collecting device according to claim 11, wherein the third locking member comprises a third toothed rack disposed along the length direction of the suction pipe, and the fourth locking member comprises a fourth toothed rack disposed along the length direction of the suction pipe and matched with the third toothed rack, and the length of the third toothed rack is less than the length of the fourth toothed rack.

13. The dust collecting device according to claim 11, wherein the second operation portion comprises a second button assembly operably disposed on the main housing, and the third locking member responds to the operation of the second button assembly.

14. The dust collecting device according to claim 13, wherein the second button assembly comprises a second pressing member and a second response member disposed at the actuating end of the second pressing member, the third locking member is disposed on the second response member, and the second response member has a degree of freedom for moving relative to the main housing along the length direction of the suction pipe.

15. The dust collecting device according to claim 9, wherein the second stop portion is disposed on one side of the suction pipe opposite to the first stop portion.

16. A dust collecting device comprising:
a main housing;
a suction pipe disposed on the main housing, wherein the suction pipe has a degree of freedom for moving relative to the main housing along the length direction of the suction pipe;
**characterized in that** further comprising:
a first stop portion for limiting the moving distance of the suction pipe towards the main housing, wherein the first stop portion is disposed on the suction pipe and has the freedom for moving relative to the suction pipe along the length direction of the suction pipe; and
a first operation portion for limiting and adjusting the moving distance of the first stop portion relative to the suction pipe, wherein the first operation portion is disposed on the main housing.

17. The dust collecting device according to claim 16, wherein the first operation portion has a first position and a second position relative to the main housing, and the first operation portion is disposed in the first position to prevent the first stop portion from moving relative to the suction pipe and disposed in the second position to rotatably adjust a moving distance of the first stop portion relative to the suction pipe.

18. The dust collecting device according to claim 17, wherein the first operation portion comprises a first locking member, the first stop portion comprises a second locking member, the main housing is provided with a fifth locking member, the first locking member is respectively engaged with the second locking member and the fifth locking member when the first operation portion is in the first position, and the first locking member is engaged with the second locking member and the first locking member is separated from the fifth locking member when the first operation portion is in the second position.

19. The dust collecting device according to claim 18, wherein the first locking member comprises a ring gear, the ring gear comprises a plurality of teeth disposed at equal intervals on a circumference, the second locking member comprises a second toothed rack disposed along the length direction of the suction pipe, and the second toothed rack is meshed with at least one tooth on the ring gear.

20. The dust collecting device according to claim 19, wherein the fifth locking member comprises two limiting ribs disposed on the main housing, and at least one tooth on the ring gear is limited between the two limiting ribs when the first operation portion is in the first position.

21. The dust collecting device according to claim 18, wherein the first operation portion comprises a rotary knob, the rotary knob comprises an inner end portion located inside the main housing and an outer end portion located outside the main housing, and the first locking member is disposed on the inner end portion.

22. The dust collecting device according to claim 21, wherein the outer end portion is provided with an operable tapered surface along the circumferential direction.
